# EUROPEAN PATENT APPLICATION

(11) **EP 0 770 542 A2**
(43) Date of publication of application: **02.05.1997**
(21) Application number: 96116950.5
(22) Date of filing: 22.10.1996
(51) Int. Cl.: B62K 25/28

(54) **Bicycle frame**

(30) Priority: 23.10.1995 JP 299209/95
(71) Applicant: MIYATA INDUSTRY CO., LTD., Chigasaki-shi, Kanagawa-ken (JP)
(72) Inventor: Goto, Masayuki, c/o Miyata Industry Co., Ltd., Chigasaki-shi (JP); Tamaishi, Shigeru, c/o Miyata Industry Co., Ltd., Chigasaki-shi (JP)
(74) Representative: Tiedtke, Harro, Dipl.-Ing.

(57) **Abstract**

A bicycle frame has a front chassis (21) adapted to support thereon a handle bar (46), a front wheel (51) and a seat (45), a rear chassis (27) including a rear wheel support portion adapted to support thereon a rear wheel, and a crank bearing (33) adapted to support therein a drive crank (41) in a rotatable manner so that the rear wheel is driven by the drive crank (41), a pivot bearing arranged between the front chassis and the rear chassis to allow relative rotation between the front chassis and the rear chassis around a substantially horizontal axis of the pivot bearing, and a shock absorber (35) arranged between the front chassis and the rear chassis to absorb a kinetic energy of the relative rotation.

## Description

### Background of the Invention and Related Art Statement

The present invention relates to a bicycle frame with a wheel suspension shock absorber.

A prior art bicycle frame as disclosed by JP-U-6-1175, has a front chassis for receiving therein a handle bar, a front wheel, a seat and a rear wheel drive crank, a rear chassis for receiving therein a rear wheel, a pivot bearing for relative rotation between the front chassis and the rear chassis on a substantially horizontal axis, and a shock absorber linkage for restraining a movement of the rear wheel.

### Object and Summary of the Invention

An object of the present invention is to provide a bicycle frame with a large shock absorber capacity for a rear wheel movement.

According to the present invention, a bicycle frame comprises,
a front chassis adapted to support thereon a handle bar, a front wheel and a seat,
a rear chassis including a rear wheel support portion adapted to support thereon a rear wheel, and a crank bearing adapted to support therein a drive crank rotatably so that the rear wheel is driven by the drive crank,
a pivot bearing arranged between the front chassis and the rear chassis to allow relative rotation between the front chassis and the rear chassis around a substantially horizontal axis of the pivot bearing, and
a shock absorber arranged between the front chassis and the rear chassis to absorb a kinetic energy of the relative rotation.

Since the pivot bearing is arranged between the front chassis and the rear chassis in such a manner that a distance between the substantially horizontal axis and the rear wheel support portion is sufficiently large, a vertical movement range of the rear wheel support portion is kept large to obtain the large shock absorber capacity for the rear wheel movement, and since the crank bearing moves together with the rear wheel support portion, a bicycle drive force is transmitted with a high efficiency from a bicyclist through the crank bearing to the rear wheel.

It is preferable for simplifying the shock absorber mechanism and keeping the operation of the shock absorber mechanism correct that the shock absorber has an end connected to the front chassis and another end connected to the rear chassis, at least one of substantially straight expansion and contraction between the ends is restrained in a viscoelastic or frictional-and-elastic manner, and a positional relationship among the another end, the pivot bearing and the rear wheel support portion is fixed.

It is also preferable for simplifying the shock absorber mechanism and keeping the operation of the shock absorber mechanism correct that the shock absorber has an end connected to the front chassis and another end connected to the rear chassis, at least one of substantially straight expansion and contraction between the ends is restrained in a viscoelastic or frictional-and-elastic manner, and a positional relationship among the another end, the crank bearing and the rear wheel support portion is fixed.

If the crank bearing is arranged between the pivot bearing and the rear wheel support portion in a bicycle proceeding direction, the distance between the substantially horizontal axis and the rear wheel support portion is securely kept sufficiently large.

If a positional relationship among the crank bearing, the pivot bearing and the rear wheel support portion is fixed, the movements of the crank bearing and the rear wheel support portion relative to the bicyclist is kept correct.

If an imaginary line extending between the another end and the substantially horizontal axis and another imaginary line extending between the ends form an angle different from, that is, less or more than a right angle, and the angle changes, that is, increases or decreases toward the right angle when the rear wheel support portion moves upward relative to the front chassis, the larger a resistant force against the upward motion of the rear wheel support portion is, the higher the rear wheel support portion moves upward relative to the front chassis.

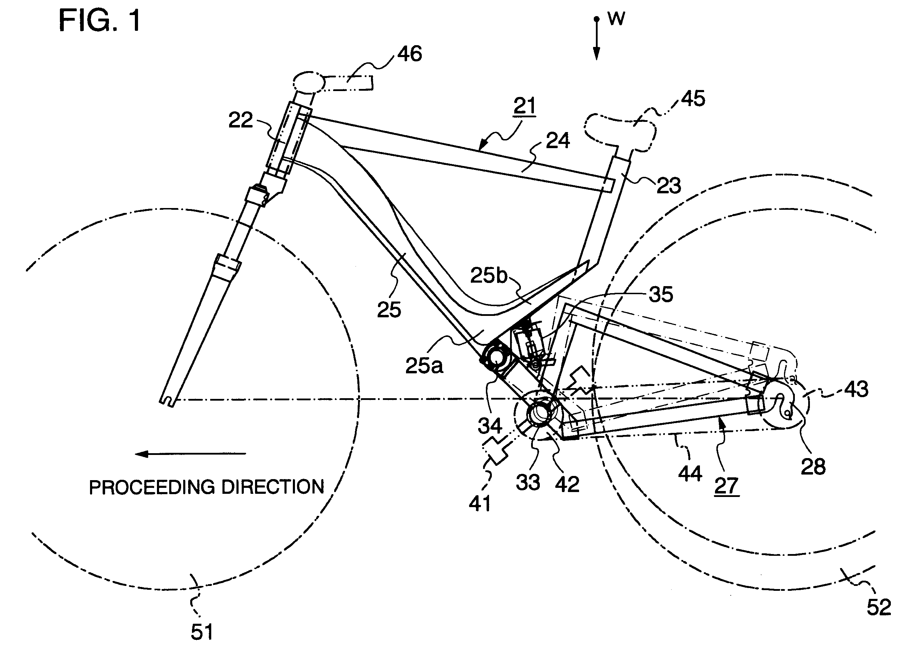

If the pivot bearing is arranged between the front chassis and the rear chassis in such a manner that a center of gravity W of a bicyclist is held between the substantially horizontal axis and the rear wheel support portion in a bicycle proceeding direction (as shown in Fig. 1) even when the rear wheel is driven by the bicyclist, a horizontal position of the rear wheel support portion is kept stable so that the a bicycle proceeding direction is desirably controlled.

When the crank bearing is arranged between the pivot bearing and the rear wheel support portion in the bicycle proceeding direction, it is preferable a distance between the crank bearing and the substantially horizontal axis is 5-60 percent of a distance between the crank bearing and the rear wheel support portion in the bicycle proceeding direction. It is more preferable that the distance between the crank bearing and the substantially horizontal axis is 10-40 percent of the distance between the crank bearing and the rear wheel support portion in the bicycle proceeding direction.

### Brief Description of the Drawings

Fig. 1 is a side view of a bicycle frame according to the present invention.

Fig. 2 is a side view showing a pivot and shock-absorbing mechanism between a front chassis and a rear chassis of the bicycle frame according to the present invention.

### Detailed Description of Preferred Embodiments

As shown in Fig. 1, a bicycle frame of the present invention is constituted by a front chassis 21 and a rear chassis 27. The front chassis 21 has a head tube 22 for supporting rotatably therein a handle bar 46 on which a front wheel 51 is mounted, an upright pipe 23 on which a seat 45 is mounted, an upper pipe 24 extending between the head tube 22 and the upright pipe 23, and a lower pipe 25 of L-shape extending between the head tube 22 and the upright pipe 23.

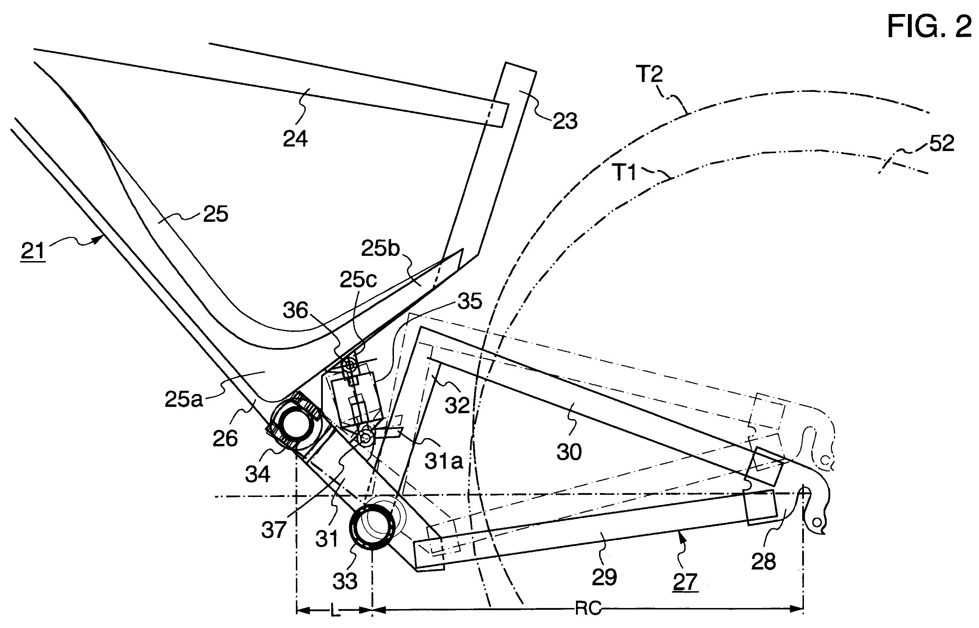

As shown in Fig. 2, the rear chassis 27 has a connecting arm 31 on which a crank bearing 33 for supporting rotatably therein a drive crank 41 is arranged, a rear wheel support end 28 for supporting thereon a rear wheel 52, a chain stay 29 extending between the connecting arm 31 and the rear wheel support end 28, and a reinforcing connector of L-shape composed by a upper stay 30 and an upright stay 32.

The front chassis 21 and the rear chassis 27 is connected to each other rotatably on a substantially horizontal axis by a pivot bearing portion 26 formed at a lower end 25a of the front chassis 21 and a pivot bearing pin 34 fixed at an end of the connecting arm 31 and received by the pivot bearing portion 26 rotatably.

A relative rotation between the front chassis 21 and the rear chassis 27 is restrained by at least one of substantially straight expansion and contraction between ends of a shock absorber unit 35. One of the ends is connected rotatably to a back stay 25b of the front chassis 21 through a hinge stay 25c fixed onto the back stay 25b and a pin 36 received by the one of the ends, and another one of the ends is connected rotatably to the rear chassis 27 through a hinge stay 31a fixed to both the connecting arm 31 and upright stay 32 and through a pin 37 received by the another one of the ends. The shock absorber unit 35 may have between the ends a coil compression spring and a hydraulic cylinder whose hydraulic flow therein is throttled so that at least an expansion between the ends is restrained in a viscoelastic manner. The shock absorber unit 35 may be a frictional-and-elastic shock absorber.

The rear wheel 52 is driven by the drive crank 41 through a chain sprocket 42 fixed coaxially to the drive crank 41, a chain sprocket 43 fixed coaxially to the rear wheel 52 and a chain 44 extending between the chain sprockets 43 and 44.

As an experimental result by the inventors, it is known that a distance L between the crank bearing 33 and the substantially horizontal axis of the pivot bearing pin 34 should be not less than 5 percent of a distance RC between the crank bearing 33 and a rotational axis of the rear wheel 52 on the rear wheel support end 28 in a bicycle proceeding direction to keep the rear chassis 27 stable when the rear wheel 52 is driven by the drive crank 41, and should be not more than 60 percent of the distance RC to keep a shock absorbing capacity and road surface follow-up ability of the rear chassis 27 high. It is more preferable that the distance L is 10-40 percent of the distance RC in the bicycle proceeding direction.

The shock absorber unit 35 absorbs by viscosity or friction therein a kinetic energy of the relative rotation between the front chassis 21 and the rear chassis 27 when the rear wheel 52 moves upward relative to the front chassis 21 from a normal position T1 to a disturbed position T2.

A bicycle frame has a front chassis adapted to support thereon a handle bar, a front wheel and a seat, a rear chassis including a rear wheel support portion adapted to support thereon a rear wheel, and a crank bearing adapted to support therein a drive crank in a rotatable manner so that the rear wheel is driven by the drive crank, a pivot bearing arranged between the front chassis and the rear chassis to allow relative rotation between the front chassis and the rear chassis around a substantially horizontal axis of the pivot bearing, and a shock absorber arranged between the front chassis and the rear chassis to absorb a kinetic energy of the relative rotation.

## Claims

1. A bicycle frame comprising,
a front chassis adapted to support thereon a handle bar, a front wheel and a seat,
a rear chassis including a rear wheel support portion adapted to support thereon a rear wheel, and a crank bearing adapted to support therein a drive crank in a rotatable manner so that the rear wheel is driven by the drive crank,
a pivot bearing arranged between the front chassis and the rear chassis to allow relative rotation between the front chassis and the rear chassis around a substantially horizontal axis of the pivot bearing, and
a shock absorber arranged between the front chassis and the rear chassis to absorb a kinetic energy of the relative rotation.

2. A bicycle frame according to claim 1, wherein the shock absorber has an end connected to the front chassis and another end connected to the rear chassis, substantially straight expansion and contraction between the ends are restrained and a positional relationship among the another end, the crank bearing and the rear wheel support portion is fixed.

3. A bicycle frame according to claim 1, wherein the shock absorber has an end connected to the front chassis and another end connected to the rear chassis, substantially straight expansion and contraction between the ends are restrained, and a positional relationship among the another end, the pivot bearing and the rear wheel support portion is fixed.

4. A bicycle frame according to claim 1, wherein the crank bearing is arranged between the pivot bearing and the rear wheel support portion in a bicycle proceeding direction.

5. A bicycle frame according to claim 1, wherein a positional relationship among the crank bearing, the pivot bearing and the rear wheel support portion is fixed.

6. A bicycle frame according to claim 1, wherein the shock absorber has an end connected to the front chassis in a rotatable manner and another end connected to the rear chassis in a rotatable manner, substantially straight expansion and contraction between the ends are restrained, an imaginary line extending between the another end and the substantially horizontal axis and another imaginary line extending between the ends form an angle different from a right angle, and the angle changes toward the right angle when the rear wheel support portion moves upward.

7. A bicycle frame according to claim 1, wherein the pivot bearing is arranged between the front chassis and the rear chassis in such a manner that a center of gravity of a bicyclist is held between the substantially horizontal axis and the rear wheel support portion in a bicycle proceeding direction even when the rear wheel is driven by the bicyclist.

8. A bicycle frame according to claim 4, wherein, in a bicycle proceeding direction, a distance between the crank bearing and the substantially horizontal axis is 5-60 percent of a distance between the crank bearing and the rear wheel support portion.

9. A bicycle frame according to claim 4, wherein, in a bicycle proceeding direction, a distance between the crank bearing and the substantially horizontal axis is 10-40 percent of a distance between the crank bearing and the rear wheel support portion.
